# EUROPÄISCHE PATENTSCHRIFT

(11) **EP 3 315 915 B1**
(45) Veröffentlichungstag und Bekanntmachung des Hinweises auf die Patenterteilung: **15.12.2021**
(21) Anmeldenummer: 17199278.7
(22) Anmeldetag: 30.10.2017
(51) Int. Cl.: G01C 22/00, G01P 3/481, G07B 13/02, G01C 22/02, G01P 3/489

(54) **WEGIMPULSADAPTER**
DISTANCE PULSE ADAPTER
ADAPTATEUR POUR IMPULSIONS DE DÉPLACEMENT

(30) Priorität: 31.10.2016 DE 102016120754
(43) Veröffentlichungstag der Anmeldung: 02.05.2018
(73) Patentinhaber: Ternica Systems GmbH, 94424 Arnstorf Bayern (DE)
(72) Erfinder: HABERL, Christian, 94424 Arnstorf (DE); KRAUTLOHER, Gerhard, 84130 Dingolfing (DE)
(74) Vertreter: Lichtnecker, Markus Christoph

(56) Entgegenhaltungen:
- DE-A1- 2 458 894
- DE-T2- 69 801 469
- DE-U1- 29 522 124
- FR-A1- 2 703 493
- GB-A- 2 443 655
- N.N.: "Analoge Signalübertragung: Stromschnittstelle 4...20 mA", Beckhoff New Automation Technology - Application Note DK9221-1111-0059 , 30. November 2011 (2011-11-30), XP002778989, Gefunden im Internet: URL:https://download.beckhoff.com/download /document/Application_Notes/DK9221-1111-00 59.pdf [gefunden am 2018-03-12]
- Analog Devices: "MT-068 TUTORIAL Difference and Current Sense Amplifiers BASIC SUBTRACTOR OR DIFFERENCE AMPLIFIER", , 31 December 2009 (2009-12-31), XP055719549, Retrieved from the Internet: URL:https://www.analog.com/media/en/traini ng-seminars/tutorials/MT-068.pdf [retrieved on 2020-07-31]
- Labs Silicon: "AN840: Redefining a New State-of-the-Art in Microampere Current-Sense Amplifiers", , 27 March 2012 (2012-03-27), pages 1-6, XP055427598, Retrieved from the Internet: URL:https://www.silabs.com/documents/publi c/application-notes/AN840.pdf [retrieved on 2017-11-22]

## Beschreibung

Die Erfindung betrifft einen Wegimpulsadapter zum Abgreifen, Aufbereiten und/oder Weitergeben von Weg-Impuls-Signalen eines Fahrzeugs an eine Auswerte- und/oder Ausgabevorrichtung, beispielsweise ein Taxameter.

Um bei einer Taxifahrt den Fahrpreis korrekt zu berechnen, benötigt ein Taxameter Zugang zu Weg-Impuls-Signalen des Fahrzeugs. Daraus lässt sich die zurückgelegte Entfernung bestimmen.

FR 2 703 493 A1 offenbart einen Wegimpulsadapter gemäß dem Oberbegriff des Anspruchs 1.

GB 2 443 655 A offenbart ein Taxameter, bei dem Daten von einem Diagnosesystem abgegriffen werden.

DE 24 58 894 A1 offenbart einen Wegimpulsgeber für Eisenbahnfahrzeuge.

Die Weg-Impuls-Signale werden bisher aus dem CAN-Bus des Fahrzeugs entnommen. Diese Signale sind jedoch vergleichsweise ungenau und erfüllen die teils strengen gesetzlichen Mess- bzw. Eichvorschriften nicht. So werden die Signale aus dem CAN-Bus bereits digitalisiert und bearbeitet, ehe diese zum Taxameter gelangen. Die eindeutige Zuordnung der Weg-Impuls-Signale zum ursprünglichen Messsignal, also einem Raddrehzahlsensorsignal, welches im Folgenden auch Drehzahlsignal genannt wird, ist nicht mehr gegeben, da die Herkunft bzw. Bearbeitung nicht ohne Weiteres nachvollzogen werden kann.

Es ist daher eine Aufgabe der Erfindung, einen Wegimpulsadapter sowie ein Verfahren zum Abgreifen, Aufbereiten und/oder Weitergeben von Weg-Impuls-Signalen zu schaffen, bei dem Weg-Impuls-Signale mit einer hohen Genauigkeit aufbereitet, bestimmt und/oder weitergegeben werden können.

Die Lösung dieser Aufgabe erfolgt durch einen Wegimpulsadapter mit den Merkmalen des Anspruchs 1 sowie durch ein Verfahren mit den Merkmalen des Anspruchs 12.

Erfindungsgemäß umfasst der Wegimpulsadapter zumindest einen Signaleingang, wenigstens einen Signalausgang und zumindest eine Signalverarbeitungseinrichtung, die zwischen dem Signaleingang und dem Signalausgang angeordnet ist.

Der Signaleingang ist erfindungsgemäß dazu ausgebildet, ein unmittelbar aus einem Drehzahlsensor für ein Fahrzeugsystem, insbesondere ein Fahrsicherheitssystem, z.B. ein ESC- und/oder ABS-Steuergerät, oder ein anderes Fahrzeugsystem, das eine genaue Wegstrecke und/oder Geschwindigkeit benötigt, stammendes Drehzahlsignal abzugreifen. Das Drehzahlsignal ist erfindungsgemäß stromgeprägt.

Bei dem Drehzahlsensor handelt es sich somit um einen Drehzahlsensor, welcher ohnehin für das Fahrzeugsystem vorhanden ist. Ein zusätzlicher Drehzahlsensor ist somit nicht notwendig, wodurch kein weiterer Bauraum benötigt wird. Auch entfallen Kosten für die Bereitstellung und Wartung eines zusätzlichen Drehzahlsensors. Beispielsweise müssen der Bauraum, die Aufhängung und/oder das Getriebe nicht verändert werden.

Der Drehzahlsensor des Fahrzeugsystems kann insbesondere das Magnetfeld eines als drehende, magnetische Scheibe ausgebildeten Inkrementalgebers erfassen. Die Scheibe kann z.B. 48 Nord- und Südpole aufweisen. Die Sensoren können ihren aktuellen Zustand, low (Lo) oder high (Hi), ausgeben, indem sie ihre Stromaufnahme verändern.

Der Zustand Lo kann dabei 7 mA entsprechen und der Zustand Hi je nach Drehzahlsensortyp 14 mA oder 28 mA.

Das Drehzahlsignal wird unmittelbar abgegriffen, d.h. dieses wird nicht bearbeitet, ehe es den Signaleingang erreicht. Der Abgriff erfolgt durch den Signaleingang insbesondere vor dem Fahrzeugsystem. Vorzugsweise erfolgt der Abgriff an einer sicherheitsrelevanten Schnittstelle zwischen dem Drehzahlsensor und dem Fahrzeugsystem. Der Wegimpulsadapter ist insbesondere in das sicherheitsrelevante System integriert.

Die Herkunft des Drehzahlsignals kann somit eindeutig zurückverfolgt werden, was bei einer Entnahme von Signalen aus dem CAN-Bus nicht der Fall ist. Die aus den Drehzahlsignalen bestimmten Weg-Impuls-Signale sind daher äußerst genau und erfüllen die zum Teil hohen gesetzlichen Anforderungen, z.B. Eichkriterien.

Das Abgreifen erfolgt bezüglich des Fahrzeugsystems zumindest im Wesentlichen rückwirkungsfrei. Der Wegimpulsadapter beeinträchtigt folglich die Funktionalität des Fahrzeugsystems nicht. Das Drehzahlsignal, welches prinzipiell über eine Pulsanzahl, eine Pulsfrequenz und/oder einen digitalen Zustand (Lo oder Hi) definiert wird und über eine sicherheitsrelevante Schnittstelle an das Fahrzeugsystem weitergeleitet wird, wird in den relevanten Größen durch den Wegimpulsadapter nicht verfälscht. Fehlverhalten des Fahrzeugsystems treten daher nicht auf.

Die Signalverarbeitungseinrichtung ist dazu ausgebildet, das Drehzahlsignal aufzubereiten und daraus Weg-Impuls-Signale zu erzeugen. Je nach Drehzahlsensortyp kann die Signalverarbeitungseinrichtung insbesondere unterschiedlich ausgebildet sein.

Der Signalausgang ist dazu ausgebildet, Weg-Impuls-Signale an eine Auswerte- und/oder Ausgabevorrichtung weiterzugeben. Bei der Auswerte- und/oder Ausgabevorrichtung kann es sich insbesondere um ein Taxameter handeln, welches aus den Weg-Impuls-Signalen die zurückgelegte Strecke und schließlich den Fahrpreis bestimmt. Aus den Weg-Impuls-Signalen kann mit Hilfe des Radumfangs auch die Geschwindigkeit bestimmt werden.

Der Signalausgang kann einen Bereich von 20.000 bis 30.000 Impulsen pro km umfassen. Bei 48 Pulsen pro Radumdrehung ergeben sich bei einem Reifendurchmesser von 67,9 cm 22.503 Impulse/km, bei einem Reifendurchmesser von 63,2 cm 24.176 Impulse/km. Eine Geschwindigkeit von 1 km/h entspricht ca. 6.251 Pulsen pro Sekunde bzw. 6.716 Pulsen pro Sekunde.

Die Pulsbreite des Drehzahlsignals kann dabei nach verschiedenen Kriterien auch während der Fahrt variieren. So kann die Pulsbreite z.B. von der Geschwindigkeit, der Drehrichtung, der Einbaulage und/oder dem Sensorabstand zur magnetischen Scheibe abhängen.

Der Signaleingang umfasst einen niederohmigen Widerstand und zwei Anschlüsse, wobei jeder Anschluss einen hochohmigen Eingangswiderstand aufweist, um Rückwirkungen zu unterbinden. Der hochohmige Eingangswiderstand beträgt mindestens 1 kΩ.

Die Anschlüsse sind über den niederohmigen Widerstand vor den Eingangswiderständen miteinander verbunden. Der niederohmige Widerstand ist notwendig, um durch den Sensorstrom, der über den Widerstand fließt, eine Spannungsdifferenz generieren zu können. Der Widerstand ist derart gewählt, dass durch ihn keine Störungen verursacht werden, aber im Gegenzug die durch ihn hervorgerufene Spannungsdifferenz groß genug für eine sichere Weiterverarbeitung ist.

Der niederohmige Widerstand beträgt maximal 1 kΩ, bevorzugt 750 Ω, 500 Ω, 250 Ω, 200 Ω, 150 Ω oder 100 Ω.

Vorzugsweise sind zwei Signaleingänge und/oder drei Signalausgänge vorgesehen. Der Wegimpulsadapter kann somit für zahlreiche Drehzahlsensortypen eingesetzt werden.

So gibt es beispielsweise Drehzahlsensoren, die auch im Stillstand bzw. Leerlauf in einem Abstand von ca. 700 ms einen Puls von etwa 1,4 ms Breite liefern. Dreht sich das Rad, so liefert der Drehzahlsensor Pulse mit geringeren Pulsbreiten. Der Sensor gibt bei jeder Änderung der magnetischen Polarität einen Puls aus. Damit erhält man pro Umdrehung 96 Pulse. Der Hi-Pegel liegt bei 14 mA.

Ferner sind Drehzahlsensoren bekannt, welche die Polarität des erkannten Magnetfelds als Ausgangspegel zurückliefern. Der Nordpol entspricht dabei z.B. dem Zustand Lo und der Südpol dem Zustand Hi. Der Hi-Pegel beträgt 14 mA.

Bei einer Umdrehung erhält man 48 Pulse. Stillstandspulse werden nicht ausgegeben.

Auch gibt es neuere, intelligente Drehzahlsensoren, welche zusätzlich zu den Drehzahlen Zusatzsignale, z.B. Datenprotokolle, übertragen. Der Hi-Pegel der Datenprotokolle bzw. Datenimpulse liegt bei 14 mA, während der Hi-Pegel der Drehzahlen, also der Geschwindigkeitspulse, 28 mA beträgt. Da nur die Geschwindigkeitspulse erfasst werden sollen, ist ein Filter nötig, der die 14 mA-Pulse ausfiltert. Der Drehzahlsensor gibt bei jeder Änderung der magnetischen Polarität einen Puls aus. Damit erhält man bei einer Umdrehung 48 Pulse.

Durch die beiden Signaleingänge sowie die drei Signalausgänge kann der Wegimpulsadapter bei neueren Drehzahlsensoren mit Zusatzsignalen sowie bei älteren Drehzahlsensoren mit und ohne Stillstandspulsen eingesetzt werden. Der Wegimpulsadapter ist daher auch abwärtskompatibel.

Ein einziger Wegimpulsadapter kann folglich für sämtliche Fahrzeugtypen unterschiedlicher Hersteller eingesetzt werden.

Weiterbildungen der Erfindung sind auch den abhängigen Ansprüchen, der Beschreibung sowie den beigefügten Zeichnungen zu entnehmen.

Erfindungsgemäß umfasst der Signaleingang zumindest einen hochohmigen Eingangswiderstand. Der Signaleingang ist insbesondere dazu ausgebildet, das Drehzahlsignal hochohmig abzugreifen, um dadurch einen möglichst geringen Einfluss auf das Stromsignal des Sensors auszuüben.

Durch den hochohmigen Eingangswiderstand wird die Signalverarbeitungseinrichtung gewissermaßen entkoppelt. Auch ein gegebenenfalls vorhandener Verstärker der Signalverarbeitungseinrichtung kann einen hochohmigen Eingang aufweisen. Eine Rückwirkung auf das Fahrzeugsystem wird dadurch unterbunden. Die Signalverarbeitungseinrichtung generiert insbesondere keine gegebenenfalls störenden Zusatzimpulse. Vorzugsweise kann die Signalverarbeitungseinrichtung sowohl positive als auch negative Spannungen verarbeiten. Der Weg-Impuls-Adapter ist somit universell beschaltbar. So kann dieser an einer beliebigen Stelle angeordnet sein, z.B. an der Lo- oder Hi-Seite oder dem Massepfad des Drehzahlsensors.

Der hochohmige Eingangswiderstand ist groß genug gewählt, um eine möglichst gute Abkopplung zu erreichen. Gleichzeitig ist dieser nicht beliebig groß, um die Messgenauigkeit nicht zu beeinträchtigen.

Bevorzugt beträgt der hochohmige Eingangswiderstand mindestens 5 kΩ, 10 kΩ, 25 kΩ, 50 kΩ, 75 kΩ oder 100 kΩ. Alternativ oder zusätzlich kann der Eingangswiderstand kleiner als 1.000 kΩ, 500 kΩ oder 250 kΩ sein.

Nach einer weiteren Ausführungsform umfasst die Signalverarbeitungseinrichtung zumindest eine Signalumwandlungsvorrichtung, die dazu ausgebildet ist, ein stromgeprägtes Drehzahlsignal in ein spannungsgeprägtes Pulssignal umzuwandeln.

So wird insbesondere ein stromgeprägtes Drehzahlsignal in ein Spannungssignal umgewandelt. Das Spannungssignal kann anschließend weiterverarbeitet werden.

Vorzugsweise sind zwei Signalverarbeitungseinrichtungen vorgesehen. Für die Drehzahlsensoren mit und ohne Stillstandspulsen kann dieselbe Signalverarbeitungseinrichtung verwendet werden, während für Drehzahlsensoren mit Zusatzsignalen eine separate Signalverarbeitungseinrichtung eingesetzt werden kann. Grundsätzlich kann jedoch für jeden Drehzahlsensortyp derselbe Signaleingang bzw. dieselbe Signaleingangsschaltung verwendet werden. Alternativ kann auch für jeden Drehzahlsensortyp ein separater Signaleingang vorgesehen sein.

Gemäß einer weiteren Ausführungsform umfasst die Signalverarbeitungseinrichtung zumindest einen Komparator, der dazu ausgebildet ist, ein analoges Pulssignal in ein digitales Pulssignal umzuwandeln.

Alternativ oder zusätzlich ist der Komparator dazu ausgebildet, Zusatzsignale, vorzugsweise Datenprotokolle, des Drehzahlsignals auszufiltern, insbesondere wobei die Zusatzsignale Hi-Werte zwischen 12 mA und 16 mA, vorzugsweise 14 mA, aufweisen.

Insbesondere können zwei Komparatoren vorgesehen sein. Für die Drehzahlsensoren mit und ohne Stillstandspulsen kann derselbe Komparator verwendet werden, während für Drehzahlsensoren mit Zusatzsignalen ein separater Komparator eingesetzt werden kann. Lediglich der Komparator für Drehzahlsensoren mit Zusatzsignalen muss eine entsprechende Filterfunktion für Zusatzsignale aufweisen.

Alternativ kann auch für jeden Drehzahlsensortyp ein separater Komparator vorgesehen sein.

Nach einer weiteren Ausführungsform umfasst die Signalverarbeitungseinrichtung einen Pulsfilter, der dazu ausgebildet ist, Pulssignale auszufiltern, welche breiter als 0,5 ms, 0,75 ms, 1 ms, 1,25 ms oder 1,5 ms sind. Bei einem entsprechend gewählten Pulsfilter werden daher Stillstandspulse ausgefiltert, welche eine Breite von maximal etwa 1 ms aufweisen. Dieser zeitliche Pulsfilter wird insbesondere lediglich für Drehzahlsensoren mit Stillstandspulsen eingesetzt.

Gemäß einer weiteren Ausführungsform umfasst die Signalverarbeitungseinrichtung zumindest einen Pulshalbierer, insbesondere Flipflop, z.B. Toggle-Flipflop, der dazu ausgebildet ist, die Anzahl an Pulssignalen zu halbieren.

Bei einem Toggle-Flipflop wechselt der Ausgangszustand mit jedem Taktimpuls.

Insbesondere können zwei Pulshalbierer vorgesehen sein. So kann je ein Pulshalbierer den Drehzahlsensoren mit Stillstandspulsen sowie den Drehzahlsensoren mit Zusatzsignalen zugeordnet sein. Für Drehzahlsensoren ohne Stillstandspulse ist hingegen kein Pulshalbierer vorgesehen.

Drehzahlsensoren mit Stillstandspulsen sowie Drehzahlsensoren mit Zusatzsignalen liefern die doppelte Anzahl an Pulsen pro Umdrehung wie Drehzahlsensoren ohne Stillstandspulse. Um die Anzahl an Pulsen an die Drehzahlsensoren ohne Stillstandspulse anzupassen, wird diese mit dem Pulshalbierer halbiert.

Durch die Halbierung der Pulse liefern sämtliche Signalausgänge in einer Umdrehung 48 Pulse. Die Signalausgänge sind somit kompatibel und müssen nicht unterschiedlich konfiguriert werden.

Drehzahlsensoren mit Stillstandspulsen sowie Drehzahlsensoren mit Zusatzsignalen weisen sehr kleine Pulsbreiten von bis zu ca. 30 µm auf, unabhängig von der aktuellen Geschwindigkeit. Bei einer unbearbeiteten Ausgabe der Pulssignale kann eine nachgeschaltete Auswerte- und/oder Ausgabevorrichtung diese geringen Pulsbreiten gegebenenfalls nicht verarbeiten, da diese nicht dafür ausgelegt ist. Mit der Halbierung der Pulssignale findet eine Umwandlung in z.B. ein symmetrisches Rechtecksignal mit einer wesentlich größeren Pulsbreite statt, welches verarbeitet werden kann.

Nach einer weiteren Ausführungsform umfasst die Signalverarbeitungseinrichtung zumindest einen Ausgangstreiber, der dazu ausgebildet ist, Pulssignale in für die Auswerte- und/oder Ausgabevorrichtung lesbare Weg-Impuls-Signale umzuwandeln. Insbesondere kann der Ausgangstreiber die digitalen Pulssignale, vorzugsweise 5 V-Pegel, in automotive Signalpegel umwandeln.

Es können insbesondere drei Ausgangstreiber vorgesehen sein, nämlich jeweils einer für einen Drehzahlsensor mit Stillstandspulsen, einen Drehzahlsensor ohne Stillstandspulsen und einen Drehzahlsensor mit Zusatzsignalen.

Insbesondere durch den Einsatz von zwei unterschiedlichen Eingängen und zwei verschiedenen Ausgängen ist der Wegimpulsadapter mit nahezu sämtlichen marktüblichen Drehzahlsensoren kompatibel.

Die Erfindung betrifft auch eine Verwendung eines erfindungsgemäßen Wegimpulsadapters zum Abgreifen, Aufbereiten und/oder Weitergeben von Weg-Impuls-Signalen für eine Auswerte- und/oder Ausgabevorrichtung, insbesondere ein Taxameter. Neue, immer strengere Eich- und Messkriterien machen z.B. für Taxameter die Bestimmung von Weg-Impuls-Signalen mit einer hohen Genauigkeit erforderlich. Diese Anforderungen können durch den Wegimpulsadapter erfüllt werden.

Ferner betrifft die Erfindung ein Verfahren zum Abgreifen, Aufbereiten und/oder Weitergeben von Weg-Impuls-Signalen eines Fahrzeugs mit einem, insbesondere erfindungsgemäßen, Wegimpulsadapter, bei dem ein unmittelbar aus einem Drehzahlsensor für ein Fahrzeugsystem, insbesondere ein Fahrsicherheitssystem wie z.B. ein ESC- und/oder ABS-Steuergerät, stammendes, stromgeprägtes, Drehzahlsignal abgegriffen wird.

Das Abgreifen erfolgt bezüglich des Fahrzeugsystems rückwirkungsfrei.

Das Drehzahlsignal wird anschließend aufbereitet. Daraus werden Weg-Impuls-Signale bestimmt. Schließlich werden die Weg-Impuls-Signale an eine Auswerte- und/oder Ausgabevorrichtung, insbesondere ein Taxameter, weitergegeben.

Alle hier beschriebenen Ausführungsformen der Vorrichtung sind insbesondere dazu ausgebildet, nach dem hier beschriebenen Verfahren betrieben zu werden. Ferner können alle hier beschriebenen Ausführungsformen der Vorrichtung sowie alle hier beschriebenen Ausführungsformen des Verfahrens jeweils miteinander kombiniert werden.

Die Erfindung wird im Folgenden beispielhaft unter Bezugnahme auf die Zeichnungen beschrieben. Es zeigen:
- Fig. 1: ein schematisches Schaltbild einer Ausführungsform eines Signaleingangs eines erfindungsgemäßen Wegimpulsadapters, und
- Fig. 2: ein Blockdiagramm einer Ausführungsform eines erfindungsgemäßen Wegimpulsadapters.

Zunächst ist zu bemerken, dass die dargestellten Ausführungsformen rein beispielhafter Natur sind. Die Merkmale einer Ausführungsform können auch beliebig mit Merkmalen einer anderen Ausführungsform kombiniert werden.

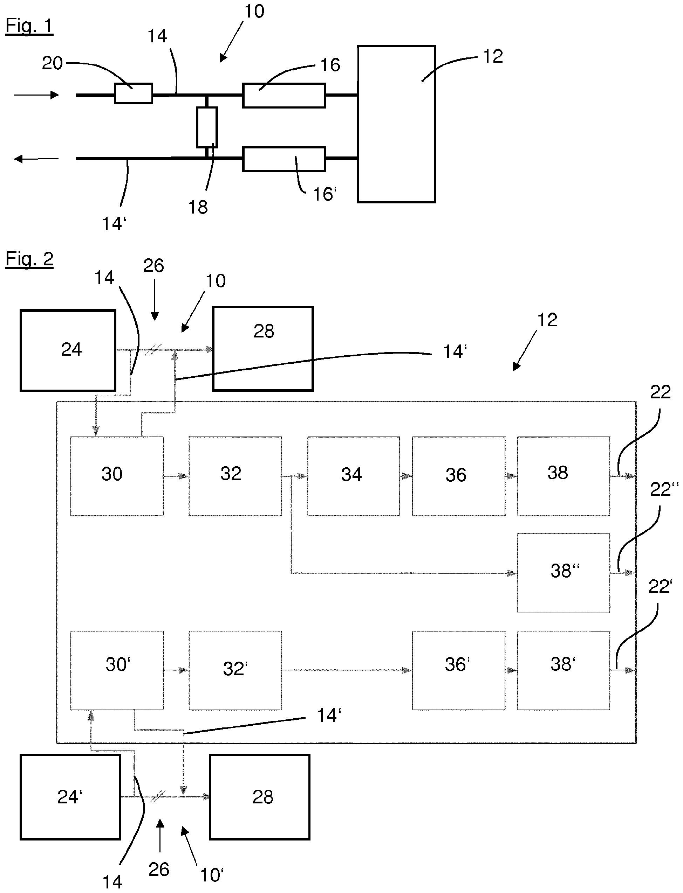

Fig. 1 zeigt einen Signaleingang 10, welcher einer Signalverarbeitungseinrichtung 12 vorgeschaltet ist.

Der Signaleingang 10 weist zwei Anschlüsse 14, 14' auf, über welche ein Drehzahlsignal an einer sicherheitsrelevanten Schnittstelle abgegriffen werden kann. Jeder Anschluss 14, 14'weist einen hochohmigen Eingangswiderstand 16, 16' auf. Die Eingangswiderstände 16, 16' können Werte von rund 10 kΩ aufweisen. In Summe mit nachgeschalteten Widerständen und dem Eingangswiderstand eines Verstärkers kann der Gesamtwiderstand etwa 110 kΩ betragen.

Durch die hochohmigen Eingangswiderstände 16, 16' wird eine Rückwirkung auf die sicherheitsrelevante Schnittstelle verhindert.

Die Anschlüsse 14, 14' sind über einen niederohmigen Widerstand 18 miteinander verbunden. Dieser niederohmige Widerstand 18 wird für das Generieren der Spannungsdifferenz benötigt. Der niederohmige Widerstand kann rund 100 Ω oder weniger betragen. Die Anschlüsse 14, 14' sind vor den hochohmigen Eingangswiderständen 16, 16' über den Widerstand 18 miteinander verbunden.

Der Anschluss 14 kann einen Schutzwiderstand 20 aufweisen. Dadurch wird eine Rückwirkung auf die sicherheitsrelevante Schnittstelle verhindert, falls ein einseitiger Kurzschluss auftreten sollte. Der Weg-Impuls-Adapter ist insbesondere kurzschlussfest.

In Fig. 2 ist ein Blockdiagramm dargestellt. Der Wegimpulsadapter umfasst zwei Signaleingänge 10, 10', eine Signalverarbeitungseinrichtung 12 sowie drei Signalausgänge 22, 22', 22".

Durch den Signaleingang 10 können Drehzahlsignale eines Drehzahlsensors 24 ohne Zusatzsignale abgegriffen werden, während durch den Signaleingang 10' Drehzahlsignale eines Drehzahlsensors 24' mit Zusatzsignalen abgegriffen werden können. Je nach vom Hersteller bzw. Fahrzeugtyp abhängigen Drehzahlsensor 24, 24' kann der Signaleingang 10 oder 10' verwendet werden.

Die Drehzahlsensoren 24, 24' sind über eine sicherheitsrelevante Schnittstelle 26 mit einem Fahrzeugsystem 28, z.B. einem ESC- und/oder ABS-Steuergerät, verbunden.

Das Abgreifen der Drehzahlsignale erfolgt durch die Anschlüsse 14, 14' der Signaleingänge 10, 10' jeweils unmittelbar an der sicherheitsrelevanten Schnittstelle 26. Die Drehzahlsignale sind somit unverfälscht und noch nicht bearbeitet.

Unabhängig vom Drehzahlsensortyp werden die stromgeprägten Drehzahlsignale in einer Signalumwandlungsvorrichtung 30, 30' zunächst in Spannungen umgewandelt, da diese besser verarbeitet werden können.

Ein nachgeschalteter Komparator 32, 32' erkennt, ob es sich um ein Lo- oder Hi-Signal handelt. Das analoge Pulssignal wird dabei in ein digitales Pulssignal umgewandelt.

Falls die Drehzahlsignale ein Zusatzsignal, also z.B. ein Datenprotokoll, umfassen, unterdrückt der Komparator 32' zudem die Zusatzsignale. Die Zusatzsignale werden ausgefiltert und lediglich die Nutzimpulse weitergeleitet.

Für Drehzahlsensoren 24 mit Stillstandspulsen ist nach dem Komparator 32 ein Pulsfilter 34 vorgesehen, welcher Stillstandspulse, also Pulssignale, die breiter als 1 ms sind, ausfiltert. Anschließend sorgt ein als Flipflop ausgebildeter Pulshalbierer 36 dafür, dass die Anzahl an Pulssignalen halbiert wird, ehe die Pulssignale an einen Ausgangstreiber 38 weitergegeben und dort in für eine Auswerte- und/oder Ausgabevorrichtung lesbare Weg-Impuls-Signale umgewandelt werden.

Bei Drehzahlsensoren 24 ohne Stillstandspulse sind weder ein Pulsfilter noch ein Flipflop vorgesehen. Die Pulssignale werden nach dem Komparator 32 unmittelbar an einen Ausgangstreiber 38" weitergeleitet.

Auch bei Drehzahlsensoren 24' mit Zusatzsignalen ist kein Pulsfilter vorgesehen. Jedoch halbiert ein Flipflop 36' die Anzahl der Pulssignale, ehe diese an einen Ausgangstreiber 38' weitergegeben und in für eine Auswerte- und/oder Ausgabevorrichtung lesbare Weg-Impuls-Signale umgewandelt werden.

Durch die Flipflops 36, 36' wird die Anzahl an Pulssignalen aus Drehzahlsensoren mit Stillstandspulsen bzw. mit Zusatzsignalen an die Anzahl an Pulssignalen aus Drehzahlsensoren ohne Stillstandspulse und ohne Zusatzsignale angepasst.

An die Ausgangstreiber 38, 38', 38" schließt sich jeweils ein Signalausgang 22, 22', 22" an. Die Weg-Impuls-Signale werden hierbei an eine Auswerte- und/oder Ausgebevorrichtung, z.B. ein Taxameter, ausgegeben.

Dadurch, dass die Drehzahlsignale unmittelbar an den Drehzahlsensoren 24, 24' abgegriffen werden, werden die Weg-Impuls-Signale mit hoher Genauigkeit bestimmt und ausgegeben. So können diese auch bei Taxametern mit hohen Ansprüchen an die Eich- bzw. Messgenauigkeit eingesetzt werden.

Zusätzliche Drehzahlsensoren sind nicht erforderlich, da auf die ohnehin vorhandenen Drehzahlsensoren des Fahrzeugsystems zurückgegriffen wird. Durch das rückwirkungsfreie Abgreifen der Drehzahlsignale wird dabei ein negativer Einfluss auf das Fahrzeugsystem vermieden.

### Bezugszeichenliste

- 10, 10': Signaleingang
- 12: Signalverarbeitungseinrichtung
- 14, 14': Anschluss
- 16, 16': hochohmiger Eingangswiderstand
- 18: niederohmiger Widerstand
- 20: Schutzwiderstand
- 22, 22', 22": Signalausgang
- 24: Drehzahlsensor ohne Zusatzsignal
- 24': Drehzahlsensor mit Zusatzsignal
- 26: sicherheitsrelevante Schnittstelle
- 28: Fahrzeugsystem
- 30, 30': Signalumwandlungsvorrichtung
- 32, 32': Komparator
- 34: Pulsfilter
- 36, 36': Flipflop, Pulshalbierer
- 38, 38', 38": Ausgangstreiber

## Patentansprüche

1. Wegimpulsadapter zum Abgreifen, Aufbereiten und/oder Weitergeben von Weg-Impuls-Signalen eines Fahrzeugs, mit
zumindest einem Signaleingang (10, 10'),
wenigstens einem Signalausgang (22, 22', 22") und
zumindest einer Signalverarbeitungseinrichtung (12), die zwischen dem Signaleingang (10, 10') und dem Signalausgang (22, 22', 22") angeordnet ist, wobei
der Signaleingang (10, 10') dazu ausgebildet ist, ein unmittelbar aus einem Drehzahlsensor (24, 24') für ein Fahrzeugsystem (28), vorzugsweise ESC- und/oder ABS-Steuergerät, stammendes, stromgeprägtes Drehzahlsignal abzugreifen, wobei das Abgreifen bezüglich des Fahrzeugsystems (28) zumindest im Wesentlichen rückwirkungsfrei erfolgt, wobei die Signalverarbeitungseinrichtung (12) dazu ausgebildet ist, das Drehzahlsignal aufzubereiten und daraus Weg-Impuls-Signale zu erzeugen, und wobei
der Signalausgang (22, 22', 22") dazu ausgebildet ist, Weg-Impuls-Signale an eine Auswerte- und/oder Ausgabevorrichtung, insbesondere ein Taxameter, weiterzugeben
wobei
der Signaleingang (10, 10') einen niederohmigen Widerstand (18) und zwei Anschlüsse (14, 14') umfasst, wobei jeder Anschluss (14, 14') einen hochohmigen Eingangswiderstand (16, 16') aufweist, wobei der hochohmige Eingangswiderstand (16, 16') mindestens 1 kΩ beträgt, und wobei der niederohmige Widerstand (19) maximal 1 kΩ beträgt und
die Anschlüsse (14, 14') über den niederohmigen Widerstand (18) vor den Eingangswiderständen (16, 16') miteinander verbunden sind.

2. Wegimpulsadapter nach Anspruch 1,
**dadurch gekennzeichnet,**
**dass** zwei Signaleingänge (10, 10') vorgesehen sind.

3. Wegimpulsadapter nach Anspruch 1 oder 2,
**dadurch gekennzeichnet,**
**dass** drei Signalausgänge (22, 22', 22") vorgesehen sind.

4. Wegimpulsadapter nach einem der vorhergehenden Ansprüche,
**dadurch gekennzeichnet,**
**dass** der hochohmige Eingangswiderstand (16, 16') mindestens 5 kΩ, 10 kΩ, 25 kΩ, 50 kΩ, 75 kΩ oder 100 kΩ und/oder maximal 1.000 kΩ, 500 kΩ oder 250 kΩ beträgt.

5. Wegimpulsadapter nach einem der vorhergehenden Ansprüche,
**dadurch gekennzeichnet,**
**dass** der niederohmige Widerstand (18) maximal 750 Ω, 500 Ω, 250 Ω, 200 Ω, 150 Ω oder 100 Ω beträgt.

6. Wegimpulsadapter nach einem der vorhergehenden Ansprüche,
**dadurch gekennzeichnet,**
**dass** die Signalverarbeitungseinrichtung (12) zumindest eine, vorzugsweise zwei, Signalumwandlungsvorrichtung/en (30, 30') umfasst, die dazu ausgebildet ist/sind, das Drehzahlsignal in ein spannungsgeprägtes Pulssignal umzuwandeln.

7. Wegimpulsadapter nach einem der vorhergehenden Ansprüche,
**dadurch gekennzeichnet,**
**dass** die Signalverarbeitungseinrichtung (12) zumindest einen, vorzugsweise zwei, Komparator/en (32, 32') umfasst, der/die dazu ausgebildet ist/sind, ein analoges Pulssignal in ein digitales Pulssignal umzuwandeln und/oder Zusatzsignale, vorzugsweise Datenprotokolle, des Drehzahlsignals auszufiltern, insbesondere wobei die Zusatzsignale Hi-Werte zwischen 12 mA und 16 mA, vorzugsweise 14 mA, aufweisen.

8. Wegimpulsadapter nach einem der vorhergehenden Ansprüche,
**dadurch gekennzeichnet,**
**dass** die Signalverarbeitungseinrichtung (12) einen Pulsfilter (34) umfasst, der dazu ausgebildet ist, Pulssignale auszufiltern, welche breiter als 0,5 ms, 0,75 ms, 1 ms, 1,25 ms oder 1,5 ms sind.

9. Wegimpulsadapter nach einem der vorhergehenden Ansprüche,
**dadurch gekennzeichnet,**
**dass** die Signalverarbeitungseinrichtung (12) zumindest einen, vorzugsweise zwei, Pulshalbierer (36, 36'), insbesondere Flipflop/s, umfasst, der/die dazu ausgebildet ist/sind, die Anzahl an Pulssignalen zu halbieren.

10. Wegimpulsadapter nach einem der vorhergehenden Ansprüche,
**dadurch gekennzeichnet,**
**dass** die Signalverarbeitungseinrichtung (12) zumindest einen, vorzugsweise drei, Ausgangstreiber (38, 38', 38") umfasst, der/die dazu ausgebildet ist/sind, Pulssignale in für die Auswerte- und/oder Ausgabevorrichtung lesbare Weg-Impuls-Signale umzuwandeln.

11. Verwendung eines Wegimpulsadapters nach einem der vorhergehenden Ansprüche zum Abgreifen, Aufbereiten und/oder Weitergeben von Weg-Impuls-Signalen für eine Auswerte- und/oder Ausgabevorrichtung, insbesondere ein Taxameter.

12. Verfahren zum Abgreifen, Aufbereiten und/oder Weitergeben von Weg-Impuls-Signalen eines Fahrzeugs mit einem Wegimpulsadapter nach einem der Ansprüche 1 bis 10, bei dem
- ein unmittelbar aus einem Drehzahlsensor (24, 24') für ein Fahrzeugsystem (28), vorzugsweise ESC- und/oder ABS-Steuergerät, stammendes, stromgeprägtes Drehzahlsignal abgegriffen wird, wobei das Abgreifen bezüglich des Fahrzeugsystems (28) zumindest im Wesentlichen rückwirkungsfrei erfolgt,
- das Drehzahlsignal aufbereitet und daraus Weg-Impuls-Signale erzeugt werden, und
- die Weg-Impuls-Signale an eine Auswerte- und/oder Ausgabevorrichtung, insbesondere ein Taxameter, weitergegeben werden.

## Claims

1. Distance-pulse adapter for tapping, processing and/or forwarding distance-pulse signals of a vehicle, having
at least one signal input (10, 10'),
at least one signal output (22, 22', 22"), and
at least one signal-processing device (12) which is disposed between the signal input (10, 10') and the signal output (22, 22', 22"), wherein
the signal input (10, 10') is designed to tap a current-carrying rotational-speed signal originating directly from a rotational-speed sensor (24, 24') for a vehicle system (28), preferably an ESC and/or ABS control unit, wherein the tapping with respect to the vehicle system (28) is carried out without feedback or at least substantially so, wherein
the signal-processing device (12) is designed to process the rotational-speed signal and to generate distance-pulse signals therefrom, and wherein
the signal output (22, 22', 22") is designed to forward distance pulse signals to an evaluation and/or output device, especially a taximeter, wherein the signal input (10, 10') comprises a low-impedance resistance (18) and two terminals (14, 14'), wherein
each terminal (14, 14') has a high-impedance input resistance (16, 16'), wherein the high-impedance input resistance (16, 16') is at least 1 kΩ, and wherein the low-impedance resistance (19) is at most 1 kΩ, and
the terminals (14, 14') are connected to one another via the low-impedance resistance (18) before the input resistance (16, 16').

2. Distance-pulse adapter according to claim 1,
**characterised in that**
two signal inputs (10, 10') are provided.

3. Distance-pulse adapter according to claim 1 or 2,
**characterised in that**
three signal outputs (22, 22', 22") are provided.

4. Distance-pulse adapter according to any of the preceding claims, **characterised in that**
the high-impedance input resistance (16, 16') is at least 5 kΩ, 10 kΩ, 25 kΩ, 50 kΩ, 75 kΩ or 100 kΩ and/or at most 1,000 kΩ, 500 kΩ or 250 kΩ.

5. Distance-pulse adapter according to any of the preceding claims, **characterised in that**
the low-impedance resistance (18) is at most 750 Ω, 500 Ω, 250 Ω, 200 Ω, 150 Ω or 100 Ω.

6. Distance-pulse adapter according to any of the preceding claims, **characterised in that**
the signal-processing device (12) comprises at least one, preferably two, signal-conversion device(s) (30, 30') which is/are designed to convert the rotational-speed signal into a voltage-carrying pulse signal.

7. Distance-pulse adapter according to any of the preceding claims, **characterised in that**
the signal-processing device (12) comprises at least one, preferably two, comparator(s) (32, 32') which is/are designed to convert an analogue pulse signal into a digital pulse signal and/or to filter out additional signals, preferably data protocols, of the rotational-speed signal, especially wherein the additional signals have Hi values between 12 mA and 16 mA, preferably 14 mA.

8. Distance-pulse adapter according to any of the preceding claims, **characterised in that**
the signal-processing device (12) comprises a pulse filter (34) which is designed to filter out pulse signals which are wider than 0.5 ms, 0.75 ms, 1 ms, 1.25 ms or 1.5 ms.

9. Distance-pulse adapter according to any of the preceding claims, **characterised in that**
the signal-processing device (12) comprises at least one, preferably two, pulse halver(s) (36, 36'), especially flipflop(s), which is/are designed to halve the number of pulse signals.

10. Distance-pulse adapter according to any of the preceding claims, **characterised in that**
the signal-processing device (12) comprises at least one, preferably three, output driver(s) (38, 38', 38") which is/are designed to convert pulse signals into distance-pulse signals which can be read by the evaluation and/or output device.

11. Use of a distance-pulse adapter according to any of the preceding claims for tapping, processing and/or forwarding distance-pulse signals for an evaluation and/or output device, especially a taximeter.

12. Method for tapping, processing and/or forwarding distance-pulse signals of a vehicle with a distance-pulse adapter according to any of claims 1 to 10, in which
- a current-carrying rotational-speed signal originating directly from a rotational-speed sensor (24, 24') for a vehicle system (28), preferably an ESC and/or ABS control unit, is tapped, wherein the tapping with respect to the vehicle system (28) is carried out without feedback or at least substantially so,
- the rotational-speed signal is processed and distance-pulse signals are generated therefrom, and
- the distance-pulse signals are forwarded to an evaluation and/or output device, especially a taximeter.

## Revendications

1. Adaptateur d'impulsions de distance pour prélever, traiter et/ou transmettre des signaux d'impulsion de distance d'un véhicule, comportant au moins une entrée de signal (10, 10'),
au moins une sortie de signal (22, 22', 22"), et
au moins un dispositif de traitement de signaux (12) disposé entre l'entrée de signal (10, 10') et la sortie de signal (22, 22', 22"),
dans lequel
l'entrée de signal (10, 10') est réalisée pour prélever un signal de vitesse de rotation qui est formé en courant et qui provient directement d'un capteur de vitesse de rotation (24, 24') pour un système de véhicule (28), de préférence un appareil de commande ESC et/ou ABS, le prélèvement étant effectué au moins sensiblement sans rétroaction par rapport au système de véhicule (28),
le dispositif de traitement de signaux (12) est réalisé pour traiter le signal de vitesse de rotation et pour générer des signaux d'impulsion de distance à partir de celui-ci, et
la sortie de signal (22, 22', 22") est réalisée pour transmettre des signaux d'impulsion de distance à un dispositif d'évaluation et/ou de sortie, en particulier à un taximètre,
l'entrée de signal (10, 10') comprend une résistance à basse impédance (18) et deux bornes (14, 14'), chaque borne (14, 14') présentant une résistance d'entrée à haute impédance (16, 16'), la résistance d'entrée à haute impédance (16, 16') étant au minimum de 1 kΩ, et la résistance à basse impédance (19) étant au maximum de 1 kΩ, et
les bornes (14, 14') sont connectées l'une à l'autre via la résistance à basse impédance (18) en amont des résistances d'entrée (16, 16').

2. Adaptateur d'impulsions de distance selon la revendication 1,
**caractérisé en ce que**
il est prévu deux entrées de signal (10, 10').

3. Adaptateur d'impulsions de distance selon la revendication 1 ou 2, **caractérisé en ce que**
il est prévu trois sorties de signal (22, 22', 22").

4. Adaptateur d'impulsions de distance selon l'une des revendications précédentes,
**caractérisé en ce que**
la résistance d'entrée à haute impédance (16, 16') est au minimum de 5 kΩ, de 10 kΩ, de 25 kΩ, de 50 kΩ, de 75 kΩ ou de 100 kΩ et/ou au maximum de 1 000 kΩ, de 500 kΩ ou de 250 kΩ.

5. Adaptateur d'impulsions de distance selon l'une des revendications précédentes,
**caractérisé en ce que**
la résistance à basse impédance (18) est au maximum de 750 Ω, de 500 Ω, de 250Ω, de 200 Ω, de 150 Ω ou de 100 Ω.

6. Adaptateur d'impulsions de distance selon l'une des revendications précédentes,
**caractérisé en ce que**
le dispositif de traitement de signaux (12) comprend au moins un, de préférence deux, dispositif(s) de conversion de signal (30, 30') qui est/sont réalisé(s) pour convertir le signal de vitesse de rotation en un signal d'impulsion formé en tension.

7. Adaptateur d'impulsions de distance selon l'une des revendications précédentes,
**caractérisé en ce que**
le dispositif de traitement de signaux (12) comprend au moins un, de préférence deux, comparateur(s) (32, 32') qui est/sont réalisé(s) pour convertir un signal d'impulsion analogique en un signal d'impulsion numérique et/ou pour filtrer des signaux supplémentaires, de préférence des protocoles de données, du signal de vitesse de rotation, en particulier les signaux supplémentaires présentant des valeurs Hi entre 12 mA et 16 mA, de préférence de 14 mA.

8. Adaptateur d'impulsions de distance selon l'une des revendications précédentes,
**caractérisé en ce que**
le dispositif de traitement de signaux (12) comprend un filtre d'impulsion (34) qui est réalisé pour filtrer les signaux d'impulsion qui sont plus larges que 0,5 ms, 0,75 ms, 1 ms, 1,25 ms ou 1,5 ms.

9. Adaptateur d'impulsions de distance selon l'une des revendications précédentes,
**caractérisé en ce que**
le dispositif de traitement de signaux (12) comprend au moins un, de préférence deux, diviseur(s) d'impulsion (36, 36'), en particulier une ou plusieurs bascules, qui est/sont réalisé(s) pour diviser par deux le nombre de signaux d'impulsion.

10. Adaptateur d'impulsions de distance selon l'une des revendications précédentes,
**caractérisé en ce que**
le dispositif de traitement de signaux (12) comprend au moins un, de préférence trois, pilote(s) de sortie (38, 38', 38") qui est/sont réalisé(s) pour convertir des signaux d'impulsion en signaux d'impulsion de distance qui peuvent être lus par le dispositif d'évaluation et/ou de sortie.

11. Utilisation d'un adaptateur d'impulsions de distance selon l'une des revendications précédentes pour prélever, traiter et/ou transmettre des signaux d'impulsion de distance pour un dispositif d'évaluation et/ou de sortie, en particulier pour un taximètre.

12. Procédé pour prélever, traiter et/ou transmettre des signaux d'impulsion de distance d'un véhicule avec un adaptateur d'impulsions de distance selon l'une des revendications 1 à 10, dans lequel
- un signal de vitesse de rotation formé en courant et provenant directement d'un capteur de vitesse de rotation (24, 24') pour un système de véhicule (28), de préférence un appareil de commande ESC et/ou ABS, est prélevé, le prélèvement étant effectué au moins sensiblement sans rétroaction par rapport au système de véhicule (28),
- le signal de vitesse de rotation est traité et des signaux d'impulsion de distance sont générés à partir de celui-ci, et
- les signaux d'impulsion de distance sont transmis à un dispositif d'évaluation et/ou de sortie, en particulier à un taximètre.
